(19) Europäisches Patentamt
European Patent Office
Office européen des brevets

(11) **EP 0 538 944 B1**

(12) **EUROPÄISCHE PATENTSCHRIFT**

(45) Veröffentlichungstag und Bekanntmachung des Hinweises auf die Patenterteilung:
**19.06.1996 Patentblatt 1996/25**

(51) Int. Cl.⁶: **B65G 47/90**

(21) Anmeldenummer: **92203186.9**

(22) Anmeldetag: **19.10.1992**

(54) **Verfahren und Vorrichtung zum Umstellen von Formationen von Behältern**

Method and device for transferring container formations

Méthode et dispositif pour le transfert de formations de récipients

(84) Benannte Vertragsstaaten:
**BE DE FR GB IT NL**

(30) Priorität: **21.10.1991 NL 9101752**

(43) Veröffentlichungstag der Anmeldung:
**28.04.1993 Patentblatt 1993/17**

(73) Patentinhaber: **ROSARIO PRODUCTIE B.V.**
**NL-5104 JK Dongen (NL)**

(72) Erfinder: **Venema, Eelco Gijsbert**
**NL-5104 JK Dongen (NL)**

(74) Vertreter: **Eveleens Maarse, Pieter et al**
**Arnold & Siedsma,**
**Advocaten en Octrooigemachtigden,**
**Sweelinckplein 1**
**2517 GK Den Haag (NL)**

(56) Entgegenhaltungen:
DE-A- 3 830 996    FR-A- 2 565 215
FR-A- 2 611 680    FR-A- 2 633 596

# Beschreibung

Die vorliegende Erfindung bezieht sich auf eine Vorrichtung zum Erfassen und Versetzen durch Anheben von in einer zeilenmässigen Formation aufgestellten Behältern wie Flaschen und dergleichen, welche an verschiedene Behältergrössen und damit an verschiedene Zeilenabstände anpassbar ist.

Eine Vorrichtung solcher Art ist in der Druckschrift FR-A-2.633.596 beschrieben.

Sie besitzt aus Schläuchen bestehende pneumatische Greiferteile an Leisten, die, zueinander parallel, an zwei senkrecht dazu verlaufenden Bändern befestigt sind.

Da diese Bänder dehnelastisch sind, können sie durch Veränderung der auf sie wirkenden Zugspannungen gleichmässig gedehnt werden, wodurch die die Greiferteile tragenden Schienen einen mehr oder weniger grossen Abstand erhalten.

Die Verwendung von Bändern elastischer Art besitzt jedoch Nachteile, wenn sehr grosse Anzahlen von Flaschen gleichzeitig versetzt werden müssen, da derartige Bänder Ermüdungserscheinungen der Elastizität zeigen, wodurch die Einstellung und Erfassung ungenau wird und Ausfall eintreten kann.

Dieser Nachteil wird durch die Vorrichtung gemäss der vorliegenden Erfindung behoben.

Dazu sind die Greiferteile erfindungsgemäss an Leisten befestigt, die von Schienen getragen werden, die mit Führungsgleitern ausgestattet sind, mit denen sie in den Schienen verschiebbar gehalten sind und von wo aus Luft in die Schläuche zugeführt werden kann, während die Leisten an ihren beiden Enden Aufsetzstifte (12) besitzen, auf die ein Einstellstab mit Einstellbohrungen in spezifischen Abständen aufgesetzt werden kann, während ein vertikal verschiebbares Klemmelementprofil (4) gegen die Leisten verspannbar ist.

Dabei werden die Greiferteile gleichzeitig in einem solchen Abstand zu einander gestellt und durch Luftzuführung in eine solche Form gebracht, dass alle Behälter durch die Greiferteile festgehalten werden, und so hochgehoben werden können.

Auf den Wechselleisten befinden sich Führungsgleiter, die innerhalb einer einfachen oder doppelten Schiene verschoben werden können, wodurch der Abstand zwischen den Greifern einstellbar ist. Unter den Wechselleisten sind Greifer mittels Schraubkupplungen angebracht, wobei die Luftzufuhr für den Stützdruck der pneumatischen Greifer durch eine Anschlussmuffe am Klemmelement stattfindet.

Die Einstellstäbe sind mit Oeffnungen in regelmässigen Abständen versehen, in die Stifte an den Wechselleisten passen, so dass durch das Einstecken dieser Stifte der Abstand für die Positionierung der Wechselleisten festgelegt wird.

Dieser Abstand stimmt überein mit dem Abstand zwischen den Greiferelementen gemäss der Formel:

$$\kappa = 0.866 . \alpha$$

wobei $\kappa$ der Abstand zwischen den Greiferelementen und $\alpha$ der Durchmesser des Behälters darstellt.

Das Verfahren für das Umstellen wird so ausgeführt, dass man die Wechselleisten mit den Stiften in Oeffnungen der Einstellstäbe im erforderlichen Abstand $\kappa$ fixiert und die Wechselleisten mit den Führungsgleitern in die Schiene einhängt, wodurch der genaue Abstand der Greiferelemente festgelegt wird, und man darauf das Klemmelement andrückt, worauf die Wechselleisten innerhalb des Rahmens oberhalb der Behälter angeordnet werden, so dass die Greiferelemente durch den Stützdruck gleichzeitig alle darunter stehenden Behälter festklemmen können, so dass diese durch Anheben des Rahmens hochgehoben werden und durch die Bewegung des Rahmens umgestellt werden.

Die erfindungsgemässe Vorrichtung wird an Hand der beigefügten Figuren näher erläutert.

Die Figuren zeigen eine Ausführung, die erfindungsgemäss mit Schläuchen als pneumatisch wirkende Greiferelemente ausgestattet ist und die bevorzugt wird, obwohl die Erfindung nicht auf diese Ausführung beschränkt ist.

In den Figuren sind übereinstimmende Teile mit denselben Bezugsnummern angegeben.

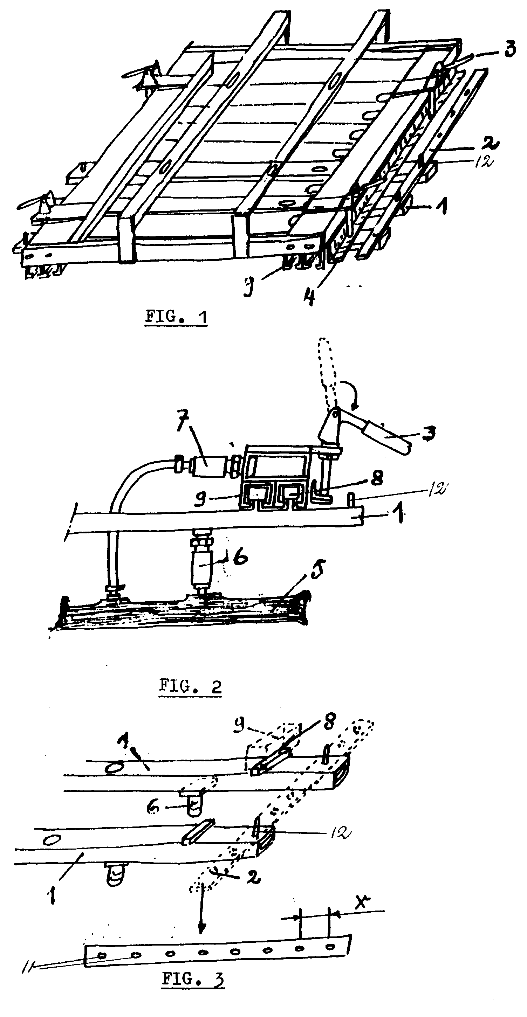

Figur 1 zeigt schematisch eine perspektivische Aufsicht auf einen Rahmen gemäss der Konstruktion mit Wechselleisten 1, auf deren Enden ein Einstellstab 2 ruht, welcher fixiert ist mittels Stiften 12 der Wechselleiste 1, wobei ein Klemmelement an der Wechselleiste 1 und das Justierungsprofil 4 entlang der Schiene 9 angebracht ist.

Figur 2 zeigt einen senkrechten Querschnitt in Einzelheiten, mit Klemmelement 3 auf der Wechselleiste 1 mit der Schiene 9, worin die Führungsgleiter 8 verschiebbar sind und die Schraubkupplung 6 den Greifer 5 festhält, während die Luft (Stützdruck) durch die Zufuhrmuffe 7 zugeführt wird.

Figur 3 zeigt die Befestigung des Einstellstabes 2 auf der Wechselleiste 1, auf welcher sich Führungsgleiter 8 in der Schiene 9 befinden. Der Einstellstab 2 besitzt im Abstand $\kappa$ Oeffnungen, um die Wechselleiste 1 in ihrer Position zu halten.

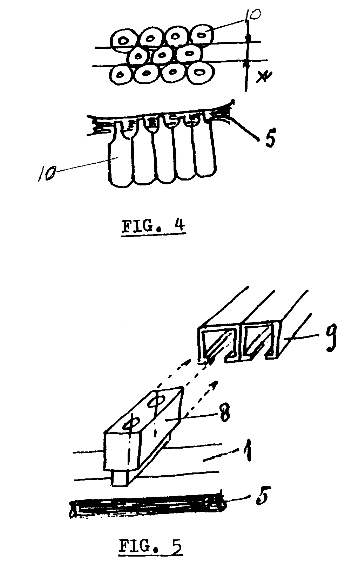

Figur 4 zeigt die Packformation der Behälter 10 in optimaler Aufstellung von oben und von der Seite, wobei der Abstand zwischen den Greifern oder Schläuchen $\kappa$ beträgt.

Figur 5 zeigt, wie der Führungsgleiter 8 auf der Wechselleiste 1 in die Schiene 9 geschoben wird.

Als Greifer sind dabei flexible Schläuche vorgesehen, deren Durchmesser sich vergrössert, wenn Luft eingeblasen wird unter Ueberdruck, so dass der Hals der Behälter, z.B. von Flaschen, zwischen den Schläuchen festgeklemmt wird.

Es können jedoch in einer alternativen Ausführung auch aufblasbare Zungen aus flexiblem Material, wie Gummi oder Elastomere, verwendet werden als Greifer, wobei dann die Zungen in Reihen aufgestellt sind, sodass sie in die Hälse der Flaschen als Halter eingreifen können.

Die mit Hilfe der Klemmelemente 3 einstellbaren Greifer 5 können somit schlauchförmig, zungenförmig oder bandförmig gefertigt sein.

Sie besitzen den Vorteil, dass sie sich der Form der Behälter anpassen, sodass mit einer Einstellung jeweils Behälterpartien gleicher, doch von vorangegangenen Partien abweichender Abmessungen und Formen,von oder auf Paletten, Packtischen, Schachteln usw. überstellt werden können.

Bei grossen Serien können die Klemmelemente nicht nur mechanisch, sondern auch elektrisch eingestellt werden mittels eines Elektromotors, vorzugsweise mittels eines Servomotors mit Servoschaltung, dessen Steuerung mit Hilfe eines einfachen Programms durch einen Hebel erfolgt, oder durch einen hydraulischen oder pneumatischen Zylinder.

Die beschriebenen Ausführungsformen sind Verkörperungen der Erfindung, worauf diese nicht beschränkt ist.

Die beschriebene Vorrichtung und Methode für das Überstellen von Behältern oder Flaschen von und auf Paletten, Zwischenböden, in Dosen, Lattenkisten oder auf Packtische schnell und automatisch in formierte Reihen kann vortrefflich in bestehende Verpackungs- und Produktionsstrassen eingefügt werden.

**Patentansprüche**

1. Vorrichtung zum Erfassen und Versetzen durch Anheben von in einer zeilenmässigen Formation aufgestellten Behältern (10), wie Flaschen und dergleichen, welche an verschiedene Behältergrößen und Zeilenabstände anpaßbar ist, mittels aus Schläuchen bestehender pneumatischer Greiferteile (5), die an einem Rahmen an parallelen Leisten (1) angebracht sind, **dadurch gekennzeichnet**, daß die Leisten (1) von Schienen (9) getragen werden, die mit Führungsgleitern (8) ausgestattet sind, mit denen sie in den Schienen (9) verschiebbar gehaltert sind, von wo aus Luft in die Schläuche zugeführt werden kann, daß die Leisten (1) an ihren beiden Enden Aufsetzstifte (12) besitzen, auf die ein Einstellstab (2) mit Einstellbohrungen (11) in spezifischen Abständen aufgesetzt werden kann, und daß ein vertikal gegenüber den Schienen verschiebares Klemmelementprofil (4) gegen die Leisten (1) verspannbar ist.

2. Verwendung der Vorrichtung gemäß Anspruch 1, **dadurch gekennzeichnet**, daß die Greiferteile (5) gleichzeitig in einem solchen Anstand zu einander gestellt werden und durch Luftzuführung eine solche Formaufweiterung erhalten, daß alle Behälter durch sie festgehalten und hochgehoben werden können.

**Claims**

1. Device for the gripping and displacement by lifting of containers (10) assembled in linear formation, such as bottles and the like, which can be adapted to different container sizes and line spacings by means of pneumatic gripper parts (5) consisting of flexible tubes which are fitted on parallel bars (1) on a frame, characterised in that the bars (1) are supported by rails (9), which are equipped with guide slides (8), with which they are displaceably mounted in the rails (9), from where air can be fed into the tubes, that at both of their ends the bars (1) have attaching pins (12), on to which an adjusting rod (2) with adjusting bores (11) at specific intervals can be placed, and that a clamping element section (4) vertically displaceable with respect to the rails can be braced against the bars (1).

2. Use of the device according to claim 1, characterised in that the gripper parts (5) are simultaneously positioned at such a distance from one another and through air supply are given such an expansion of shape that all containers can be held firmly and lifted up by them.

**Revendications**

1. Dispositif destiné à saisir et à transférer en les soulevant des récipients (10) disposés dans une formation en ligne, tels que des bouteilles et similaires, qui peut être adapté à des tailles différentes de récipients et en conséquence à des intervalles différents dans la rangée, au moyen de pièces de préhension (5) pneumatiques composées de tuyaux et disposées sur un cadre sur des bandes (1) parallèles, caractérisé en ce que les bandes (1) sont portées par des rails (9) équipés de coulisses de guidage (8), par lesquelles elles sont maintenues de façon coulissante dans les rails (9) et à partir desquelles de l'air peut être amené dans les tuyaux, en ce que les bandes (1) possèdent à leurs deux extrémités des chevilles de pose (12) sur lesquelles une barre de réglage (2) avec des trous de réglage (11) peut être posée à des intervalles spécifiques, et en ce qu'un profilé d'élément de serrage (4) coulissant de façon verticale par rapport aux rails peut être serré contre les bandes (1).

2. Utilisation du dispositif selon la revendication 1, caractérisée en ce que les parties de préhension (5) sont en même temps disposées à une telle distance les unes des autres et subissent du fait de l'arrivée d'air une telle dilatation de la forme qu'elles peuvent maintenir et soulever tous les récipients.

FIG. 1

FIG. 2

FIG. 3

FIG. 4

FIG. 5